# EUROPEAN PATENT APPLICATION

(11) **EP 3 950 339 A1**
(43) Date of publication of application: **09.02.2022**
(21) Application number: 19923071.5
(22) Date of filing: 25.10.2019
(51) Int. Cl.: B32B 27/20, B32B 27/36, C08L 67/00, C08L 69/00, C08L 81/06, C08L 101/00, C09D 167/03, B32B 15/08, B32B 15/09, C09D 7/65, C08G 63/189

(54) **COMPOSITION, LAYERED BODY, AND COVERED METAL PRODUCT**

(30) Priority: 29.03.2019 JP 2019068737
(71) Applicant: TOYOBO CO., LTD., Osaka-shi Osaka 530-8230 (JP)
(72) Inventor: YAMAZAKI, Masao, Otsu-shi, Shiga 520-2194 (JP); WATANABE, Naoko, Otsu-shi, Shiga 520-0292 (JP)
(74) Representative: Müller-Boré & Partner Patentanwälte PartG mbB
(86) International application number: PCT/JP2019/041826
(87) International publication number: WO 2020/202615

(57) **Abstract**

The present invention provides a composition having a sufficiently satisfying level of processability, curability, retort resistance or heat resistance, and abrasion resistance. The present invention relates to a composition containing: a solvent; thermoplastic resin (A) particles undissolved in the solvent; and a thermoplastic resin (B) dissolved in the solvent.

## Description

### TECHNICAL FIELD

The present invention relates to compositions, laminates, and coated metal articles.

### BACKGROUND ART

Metal surfaces have been conventionally coated with coating layers in many cases in order to be protected from corrosion and to have good design, and various compositions suitable for coating layers have been studied and developed.

For example, coating materials for inside surfaces of a can are provided on the assumption that the coating materials do not impair the taste and flavor of the content of the can and are applicable to various types of cans. Examples of recently required properties of the coating materials include: (1) having no risk of causing toxicity such as endocrine-disrupting chemicals and no risk of causing environmental contamination; (2) having resistance to heat sterilization (retort) process (retort resistance); and (3) having excellent adhesion, curability, and processability.

Vinyl chloride resins and epoxy-phenol resins have been conventionally often used as resins for coating materials for inside surfaces of a can, but they both have been reported to have issues of the endocrine-disrupting chemicals (in particular, vinyl chloride resins have been reported to have an issue that vinyl chloride monomers remaining in the resins may cause serious health issues such as carcinogenic risk; and epoxy-phenol resins require high temperature for baking, which may cause endocrine-disrupting chemicals as described in the above).

Thus, novel materials for coating inside surfaces are under development which can overcome these issues. Furthermore, coating components for outside surfaces of a can are also more and more required to have similar properties to those of coating materials for inside surfaces of a can, such as a countermeasure to endocrine-disrupting chemicals as well as processability and retort resistance.

For example, an attempt has been made in which polyester resins, which produce neither noxious gas nor corrosive gas during incineration and provide a coating film free from endocrine-disrupting chemicals such as bisphenol A, are used as coating materials for inside surfaces of a can (e.g., Patent Literature 1). Still, no compositions have been found which have a satisfying level in all of the processability, curability, and retort resistance and are suitable to can coating.

Meanwhile, application of resins such as acrylic resins, modified epoxy resins, and modified epoxy-amino resins has been known as a technique for protecting a metal-deposited layer produced by vapor deposition of a metal such as aluminum, gold, silver, or platinum on a substrate made of a thermoplastic resin or the like, for example. Metal-deposited substrates are widely used for various structures or the like intended for automobiles, home electrical appliances, foods, and clothes and are especially more and more used for wrapping materials, solar cells, organic EL, and electronic devices such as semiconductors. In particular, aluminum-deposited substrates are used for various applications because of their inexpensiveness.

Unfortunately, use of these resins as protective layers applied to metal-deposited layer surfaces cannot sufficiently improve the required properties such as heat resistance and abrasion resistance.

### CITATION LIST

### - Patent Literature

Patent Literature 1: JP 2005-350508 A

### SUMMARY OF INVENTION

### - Technical Problem

As described, compositions sufficiently satisfying the properties required for coating components for a metal, such as processability, curability, retort resistance or heat resistance, and abrasion resistance are still awaited.

The present invention aims to provide a composition having a sufficiently satisfying level of processability, curability, retort resistance or heat resistance, and abrasion resistance.

### - Solution to Problem

The present inventors made various studies on the compositions having a sufficiently satisfying level of processability, curability, retort resistance or heat resistance, and abrasion resistance and then prepared a composition containing a solvent, thermoplastic resin (A) particles undissolved in the solvent, and a thermoplastic resin (B) dissolved in the solvent. The present inventors found that a coating film formed by coating with the composition sufficiently satisfies the aforementioned required properties and thereby completed the present invention.

In other words, the present invention relates to a composition containing: a solvent; thermoplastic resin (A) particles undissolved in the solvent; and a thermoplastic resin (B) dissolved in the solvent.

### - Advantageous Effects of Invention

The composition of the present invention can sufficiently exert the properties required for coating components for a metal, such as processability, curability, retort resistance or heat resistance, and abrasion resistance.

### BRIEF DESCRIPTION OF DRAWINGS

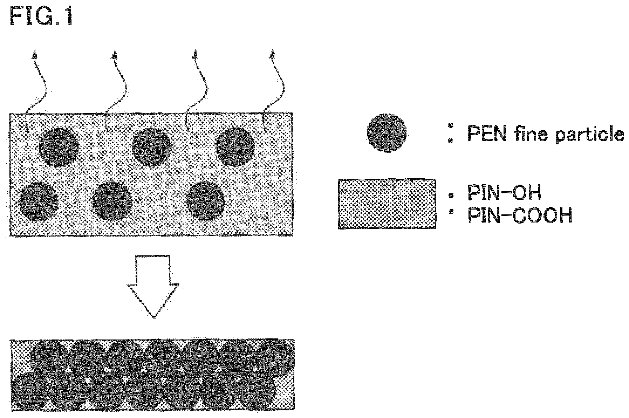

Fig. 1 is a conceptual view showing that the composition of one of the later-described examples is turned into a coating film.

### DESCRIPTION OF EMBODIMENTS

The present invention is described in detail below.

Any combination of two or more of the below described preferred embodiments is also a preferred embodiment of the present invention.

The composition of the present invention contains a solvent, thermoplastic resin (A) particles undissolved in the solvent, and a thermoplastic resin (B) dissolved in the solvent.

### (Thermoplastic resin)

In the composition of the present invention, examples of the thermoplastic resin used for the thermoplastic resin (A) undissolved in the solvent and the thermoplastic resin (B) dissolved in the solvent include aromatic polyester resins such as a polyethylene terephthalate, a polyethylene isophthalate, a polyethylene isophthalate naphthalate (PIN), a polypropylene terephthalate, a polybutylene terephthalate, a polyethylene naphthalate (PEN), a polybutylene naphthalate (PBN), an amorphous polyarylate, and a liquid crystal polyester; aliphatic polyester resins such as polylactic acid, polyglycol acid, a polyethylene alkanoate, a polybutylene alkanoate, a polyhydroxy alkanoate, and a polycaprolactone; polyamide resins such as nylon 6, nylon 6,6, nylon 12, and MXD6 nylon; polycarbonate resins; polyvinyl chlorides; polyvinylidene chlorides; polyolefins; polystyrenes; (meth)acrylic resins; acrylonitrile-butadiene-styrene (ABS) resins; polyurethane resins; vinyl chloride-vinylidene chloride-acrylonitrile copolymers; acrylonitrile-styrene (AS) resins; vinyl acetate resins; polyphenylene ethers; polysulfones; polyethersulfones; polyether ketones (PEK); polyether ether ketones (PEEK); and liquid crystal plastics. The thermoplastic resin may also be a recycled resin typified by recycled PET resins and may be crystalline or amorphous. The thermoplastic resin is not limited to these examples.

Appropriate thermoplastic resin(s) can be selected in consideration of the solubility in the solvent in the composition of the present invention so as to allow both of the thermoplastic resin (A) undissolved in the solvent and the thermoplastic resin (B) dissolved in the solvent to be present in the solvent. The thermoplastic resin (A) undissolved in the solvent and the thermoplastic resin (B) dissolved in the solvent may be obtained from the same resin having the same composition, but are preferably obtained from resins having different compositions. In other words, the thermoplastic resin (A) undissolved in the solvent preferably belongs to a different species from the thermoplastic resin (B) dissolved in the solvent. Use of the thermoplastic resin (A) undissolved in the solvent and the thermoplastic resin (B) dissolved in the solvent obtained from resins having different compositions can suitably adjust mechanical balances such as the balance between a crystalline component and an amorphous component, and thereby achieves significant effects of the present invention. In the composition of the present invention, when the thermoplastic resin (A) undissolved in the solvent and the thermoplastic resin (B) dissolved in the solvent are obtained from resins having different compositions, for example, a resin having the same composition as the resin constituting the thermoplastic resin (A) particles undissolved in the solvent may be partly dissolved in the solvent.

### [Thermoplastic resin (A) particles undissolved in the solvent]

In the composition of the present invention, the thermoplastic resin (A) particles undissolved in the solvent preferably contain a polybutylene naphthalate and/or a polyethylene naphthalate.

The polybutylene naphthalate may be any polybutylene naphthalate containing a structure unit (repeating unit) represented by the following formula (1) in at least part thereof, and is preferably one substantially consisting of the structure unit. Preferred examples of the terminal group of the polybutylene naphthalate include, but are not limited to, a hydroxy group and a carboxy group.

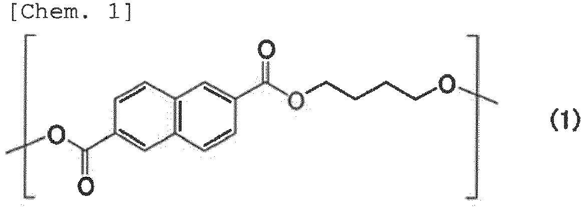

The polyethylene naphthalate may be any polyethylene naphthalate containing a structure unit (repeating unit) represented by the following formula (2) in at least part thereof, and is preferably one substantially consisting of the structure unit. Preferred examples of the terminal group of the polyethylene naphthalate include, but are not limited to, a hydroxy group and a carboxy group.

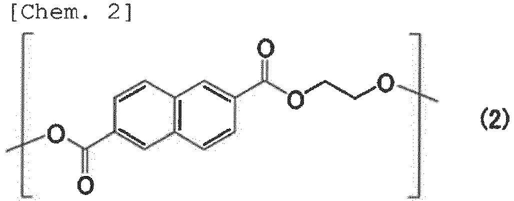

In the composition of the present invention, the thermoplastic resin (A) undissolved in the solvent according to the present invention has a solubility in the solvent at 25°C of preferably 10% by mass or less, more preferably 8% by mass or less, still more preferably 5% by mass or less, particularly preferably substantially being undissolved in the solvent.

The thermoplastic resin (A) particles undissolved in the solvent of the present invention have a number average particle size of preferably 10 nm to 1000 µm, more preferably 100 nm to 500 µm, still more preferably 0.5 to 30 µm, particularly preferably 1 to 10 µm. More than 1000 µm of the number average particle size tends to increase the thickness of a coating film or tends to cause a discontinuous film when a thin film is formed. Less than 10 nm of the number average particle size tends to increase the viscosity of a resulting suspension, possibly causing difficulty in separation.

The number average particle size herein is a value obtained by diluting the thermoplastic resin (A) particles undissolved in the solvent with methanol and applying the diluted resin to a PET film with a spin coater, followed by drying to provide a coating film, and measuring with a scanning electron microscope (SU1510, available from Hitachi High-Tech Corporation) or an optical microscope (VHX-2000, available from Keyence Corporation).

The thermoplastic resin (A) particles undissolved in the solvent can be obtained, for example, by once dissolving the thermoplastic resin (A) in the solvent at a high temperature and then cooling the solution.

The temperature of the solvent for dissolving the thermoplastic resin (A) is preferably 70°C to 200°C. When the thermoplastic resin (A) is a polyethylene naphthalate or a polybutylene naphthalate, the temperature is more preferably 130°C to 190°C, still more preferably 140°C to 185°C. The solvent at a temperature lower than 70°C tends to inhibit dissolving of the thermoplastic resin (A), while the solvent at a temperature higher than 200°C tends to cause degradation of the thermoplastic resin (A) or the solvent, possibly causing yellowing thereof.

The thermoplastic resin (A) may be dissolved in the solvent using ultrasonic waves, a stirrer, or the like. Examples of the stirrer include a homogenizer, a homomixer, a roll mill, and a bead mill. Any one or two or more of these can be used.

In dissolving of the thermoplastic resin (A) in the solvent, the amount of thermoplastic resin (A) to be added is preferably 1 to 30% by mass, more preferably 1 to 20% by mass of the solution. Less than 1% by mass of the thermoplastic resin (A) causes a problem in productivity. More than 30% by mass of the thermoplastic resin (A) is less likely to be dissolved.

The thermoplastic resin (A) solution may be cooled by any method, such as leaving it to stand at room temperature or using a cooler such as a heat exchanger. Cooling with a heat exchanger may be carried out by cooling the thermoplastic resin (A) solution itself with a heat exchanger or by mixing the thermoplastic resin (A) solution with a solvent cooled to 20°C to -90°C with a heat exchanger and thereby cooling the solution.

### [Thermoplastic resin (B) dissolved in the solvent]

In the composition of the present invention, the thermoplastic resin (B) dissolved in the solvent preferably contains at least one selected from the group consisting of a polyethylene isophthalate naphthalate, a polyethersulfone, a liquid crystal polyester, and a polycarbonate.

The polyethylene isophthalate naphthalate contains a naphthalene dicarboxylic acid component (a structure unit derived from naphthalene dicarboxylic acid) and an isophthalic acid component (a structure unit derived from isophthalic acid) in at least part thereof.

Examples of the naphthalene dicarboxylic acid include 1,4-naphthalene dicarboxylic acid, 1,5-naphthalene dicarboxylic acid, 1,8-naphthalene dicarboxylic acid, 2,6-naphthalene dicarboxylic acid, and 2,7-naphthalene dicarboxylic acid. One or two or more of these may be selected for use. Preferred among these is 2,6-naphthalene dicarboxylic acid (NDC).

The polyethylene isophthalate naphthalate is preferably one containing a structure unit (repeating unit) represented by the following formula (3) in at least part thereof, and is more preferably one substantially consisting of the structure unit. Preferred examples of the terminal group of the polyethylene isophthalate naphthalate include, but are not limited to, a hydroxy group and a carboxy group.

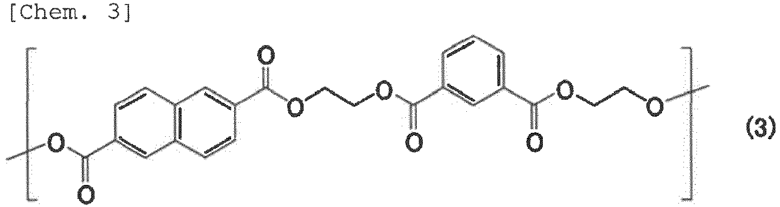

The amount of the isophthalic acid component (a structure unit derived from isophthalic acid) in the polyethylene isophthalate naphthalate is preferably more than 10 mol%, more preferably 15 mol% or more, still more preferably 20 mol% or more, further more preferably 30 mol% or more, particularly preferably 40 mol% or more based on all acid components (all structure units derived from all acid components) taken as 100 mol%. The amount of the structure unit derived from isophthalic acid is preferably 90 mol% or less, more preferably 85 mol% or less, still more preferably 80 mol% or less, further more preferably 70 mol% or less, particularly preferably 60 mol% or less.

The amount of the naphthalene dicarboxylic acid component (a structure unit derived from naphthalene dicarboxylic acid) in the polyethylene isophthalate naphthalate is preferably 10 mol% or more, more preferably 15 mol% or more, still more preferably 20 mol% or more, further more preferably 30 mol% or more, particularly preferably 40 mol% or more based on all structure units derived from all acid components taken as 100 mol%. The amount of the structure unit derived from naphthalene dicarboxylic acid is preferably less than 90 mol%, more preferably 85 mol% or less, still more preferably 80 mol% or less, further more preferably 70 mol% or less, particularly preferably 60 mol% or less.

The total amount of the isophthalic acid component and the naphthalene dicarboxylic acid component (a structure unit derived from isophthalic acid and a structure unit derived from naphthalene dicarboxylic acid) in the polyethylene isophthalate naphthalate is preferably 50 mol% or more, more preferably 60 mol% or more, still more preferably 70 mol% or more, further more preferably 80 mol% or more, particularly preferably 90 mol% or more, most preferably 100 mol% based on all structure units derived from all acid components taken as 100 mol%.

In the polyethylene isophthalate naphthalate, the structure unit derived from isophthalic acid and the structure unit derived from naphthalene dicarboxylic acid have a ratio (ratio by mole) of preferably 10/90 to 90/10, more preferably 15/85 to 85/15, still more preferably 20/80 to 80/20, further more preferably 30/70 to 70/30, particularly preferably 40/60 to 60/40.

The amount of the ethylene glycol component (a structure unit derived from ethylene glycol) in the polyethylene isophthalate naphthalate is preferably 30 mol% or more, more preferably 50 mol% or more, still more preferably 90 mol% or more, particularly preferably 100 mol% based on all glycol components (all structure units derived from all glycols) taken as 100 mol%.

The polyethylene isophthalate naphthalate has a number average molecular weight (Mn) of preferably 800 or more, more preferably 1000 or more, still more preferably 2000 or more. The number average molecular weight (Mn) is preferably 40000 or less, more preferably 30000 or less, still more preferably 20000 or less.

The method for determining the number average molecular weight is as described in the examples.

In the polyethylene isophthalate naphthalate, the sum of the acid value and the hydroxy value is preferably 40 eq/t or more, more preferably 50 eq/t or more, still more preferably 65 eq/t or more, particularly preferably 100 eq/t or more. The sum of the acid value and the hydroxy value is preferably 4000 eq/t or less, more preferably 2500 eq/t or less, still more preferably 2000 eq/t or less, particularly preferably 1000 eq/t or less.

The methods for determining the acid value and the hydroxy value are as described in the examples.

The polyethylene isophthalate naphthalate can be produced by a known polyester polycondensation method. Examples thereof include the direct polymerization method including esterificating an acid component and a glycol component to provide an oligomer and subjecting the oligomer to melt polycondensation under reduced pressure at high temperature, and the transesterification method including subjecting a C1-C2 lower alkyl ester of an acid component and a glycol component to transesterification to provide an oligomer and subjecting the oligomer to melt polycondensation under reduced pressure at high temperature.

The polyethylene isophthalate naphthalate may contain a structure unit derived from one or more monomers selected from: a divalent or higher acid component Z other than the isophthalic acid component and the naphthalene dicarboxylic acid component in an amount within the range not exceeding the total amount of the isophthalic acid component and the naphthalene dicarboxylic acid component; and a divalent or higher glycol component Y other than the ethylene glycol component in an amount within the range not exceeding the amount of the ethylene glycol component.

Polycondensation for producing the polyethylene isophthalate naphthalate may be performed using a polymerization catalyst. Examples of the polymerization catalyst include titanium compounds (e.g., tetra-n-butyl titanate, tetraisopropyl titanate, and titanium oxy acetylacetonate), antimony compounds (e.g., tributoxy antimony and antimony trioxide), germanium compounds (e.g., tetra-n-butoxy germanium and germanium oxide), zinc compounds (e.g., zinc acetate), and aluminum compounds (e.g., aluminum acetate and aluminum acetylacetate). One or two or more of these polymerization catalysts may be used. Preferred among these are titanium compounds in terms of polymerization reactivity.

The divalent or higher acid component Z other than the isophthalic acid component and the naphthalene dicarboxylic acid component is preferably a structure unit derived from an alicyclic polyvalent carboxylic acid, a structure unit derived from an aliphatic polyvalent carboxylic acid, or a structure unit derived from an aromatic polyvalent carboxylic acid. Examples of the alicyclic polyvalent carboxylic acid include alicyclic dicarboxylic acids such as 1,4-cyclohexane dicarboxylic acid, 1,3-cyclohexane dicarboxylic acid, 1,2-cyclohexane dicarboxylic acid, and acid anhydrides of these. Examples of the aliphatic polyvalent carboxylic acid include aliphatic dicarboxylic acids such as succinic acid, adipic acid, azelaic acid, sebacic acid, dodecanedioic acid, and dimer acids. Examples of the aromatic polyvalent carboxylic acid include aromatic dicarboxylic acids such as terephthalic acid, orthophthalic acid, biphenyl dicarboxylic acid, diphenic acid, and 5-hydroxy-isophthalic acid. The examples also include aromatic dicarboxylic acids containing a sulfonic acid group or a sulfonic acid salt group, such as sulfoterephthalic acid, 5-sulfoisophthalic acid, 4-sulfophthalic acid, 4-sulfonaphthalene-2,7-dicarboxylic acid, 5-(4-sulfophenoxy)isophthalic acid, sulfoterephthalic acid, and/or metal salts and ammonium salts of these. One or two or more of these may be selected for use. Preferred among these are aromatic dicarboxylic acids and aliphatic dicarboxylic acids, and more preferred are terephthalic acid, adipic acid, and sebacic acid.

The divalent or higher glycol component Y other than ethylene glycol is preferably a structure unit derived from an aliphatic glycol, a structure unit derived from an alicyclic glycol, a structure unit derived from an ether bond-containing glycol, or a structure unit derived from an aromatic group-containing glycol. Examples of the aliphatic glycol include 1,2-propylene glycol, 1,3-propanediol, 1,4-butanediol, 1,5-pentanediol, 2-methyl-1,3-propanediol, neopentyl glycol, 1,6-hexanediol, 3-methyl-1,5-pentanediol, 1,7-heptanediol, 1,8-octanediol, 1,9-nonanediol, 2-ethyl-2-butyl propanediol, neopentylglycol hydroxypivalate ester, dimethylol heptane, and 2,2,4-trimethyl-1,3-pentanediol. Examples of the alicyclic glycol include 1,4-cyclohexanediol, 1,4-cyclohexane dimethanol, tricyclodecanediol, tricyclodecane dimethylol, spiroglycol, hydrogenated bisphenol A, adducts of ethylene oxide with hydrogenated bisphenol A, and adducts of propylene oxide with hydrogenated bisphenol A. Examples of the ether bond-containing glycol include diethylene glycol, triethylene glycol, dipropylene glycol, polyethylene glycol, polypropylene glycol, polytetramethylene glycol, and optionally neopentyl glycol-ethylene oxide adducts and neopentyl glycol-propylene oxide adducts. Examples of the aromatic group-containing glycol include paraxylene glycol, methaxylene glycol, orthoxylene glycol, 1,4-phenylene glycol, adducts of ethylene oxide with 1,4-phenylene glycol, bisphenol A, and glycols obtained by adding one to several moles of ethylene oxide or propylene oxide to the two phenolic hydroxy groups of a bisphenol, such as adducts of ethylene oxide with bisphenol A and adducts of propylene oxide with bisphenol A. One or two or more of these may be selected for use. Preferred among these are aliphatic glycols and ether bond-containing glycols, and more preferred are 1,4-butanediol and diethylene glycol.

In the polyethylene isophthalate naphthalate, a tri- or higher functional compound may be copolymerized with the isophthalic acid component and the naphthalene dicarboxylic acid component and/or the ethylene glycol component. Examples of the trifunctional or higher compound include a tri- or higher functional polycarboxylic acid and a tri- or higher functional polyol. Examples of the trifunctional or higher polycarboxylic acid include trimellitic acid, trimellitic anhydride, pyromellitic acid, methylcyclohexenetricarboxylic acid, oxydiphthalic dianhydride (ODPA), 3,3',4,4'-benzophenonetetracarboxylic dianhydride (BTDA), 3,3',4,4'-biphenyltetracarboxylic dianhydride (BPDA), 3,3',4,4'-diphenylsulfonetetracarboxylic dianhydride (DSDA), 4,4'-(hexafluoroisopropylidene)diphthalic dianhydride (6FDA), and 2,2'-bis[(dicarboxyphenoxy)phenyl] propane dianhydride (BSAA). Examples of the trifunctional or higher polyol include glycerin, trimethylol ethane, trimethylol propane, mannitol, sorbitol, pentaerythritol, and α-methylglucoside.

The acid value and the hydroxy value can be provided by a conventionally known method.

Examples of a method for providing an acid value include the depolymerization method that includes addition of a compound containing a carboxylic anhydride group in a molecule in a later period of polymerization and a method that includes allowing a prepolymer (oligomer) to have a high acid value and polymerizing it to provide a polyethylene isophthalate naphthalate having the acid value. Preferred is the former depolymerization method in terms of easiness of operation and easiness of obtaining the target acid value.

Examples of a carboxylic acid monoanhydride as the compound containing a carboxylic anhydride group in a molecule for providing an acid value to the polyethylene isophthalate naphthalate include monoanhydrides such as phthalic anhydride, succinic anhydride, maleic anhydride, trimellitic anhydride, itaconic anhydride, citraconic anhydride, and 5-(2,5-dioxotetrahydrofurfuryl)-3-cyclohexene-1,2-dicarboxylic anhydride; hexahydrophthalic anhydride; and tetrahydrophthalic anhydride. One or two or more of these may be used. Preferred among these is trimellitic anhydride in terms of versatility and economic efficiency.

Examples of a carboxylic acid polyanhydride as the compound containing a carboxylic anhydride group in a molecule for providing an acid value to the polyethylene isophthalate naphthalate include pyromellitic anhydride, 1,2,3,4-butanetetracarboxylic dianhydride, 1,2,3,4-pentanetetracarboxylic dianhydride, 3,3',4,4'-benzophenonetetracarboxylic dianhydride, cyclopentanetetracarboxylic dianhydride, 2,3,6,7-naphthalenetetracarboxylic dianhydride, 1,2,5,6-naphthalenetetracarboxylic dianhydride, ethylene glycol bistrimellitate dianhydride, 2,2',3,3'-diphenyltetracarboxylic dianhydride, thiophene-2,3,4,5-tetracarboxylic dianhydride, ethylenetetracarboxylic dianhydride, 4,4'-oxydiphthalic dianhydride, and 5-(2,5-dioxotetrahydro-3-furanyl)-3-methyl-3-cyclohexene-1,2-dicarboxylic anhydride. One or two or more of these may be used. Preferred among these is ethylene glycol bistrimellitate dianhydride.

For the compound containing a carboxylic anhydride group in a molecule for providing an acid value, any of the carboxylic acid monoanhydrides and the carboxylic acid polyanhydrides may be used alone or in combination.

The polyethersulfone is a polymer that contains a repeating unit including an aromatic ring, a sulfonyl bond (-SO₂-), and an ether bond (-O-). The polyethersulfone is preferably one containing any of structure units (repeating units) represented by the following formulas (4-1) to (4-3) in at least part thereof, more preferably one substantially consisting of the structure unit. Preferred examples of the terminal group of the polyethersulfone include, but are not limited to, a hydroxy group and a carboxy group.

-[C₆H₄-SO₂-C₆H₄-O]- (4-1)

-[C₆H₄-O-C₆H₄-SO₂-C₆H₄-O]- (4-2)

-[C₆H₄-C₆H₄-O-C₆H₄-SO₂-C₆H₄-O]- (4-3)

The liquid crystal polyester is typically a polyester resin containing an aromatic group-containing structure unit in at least part thereof and preferably contains a structure unit represented by the following formula (5-1), for example. The liquid crystal polyester according to the present invention may further contain a structure unit represented by the following formula (5-2) and/or a structure unit represented by the following formula (5-3). Preferred examples of the terminal group of the liquid crystal polyester include, but are not limited to, a hydroxy group and a carboxy group.

-[O-Ar¹-CO]- (5-1)

-[O-Ar²-O]- (5-2)

-[O-R¹-O]- (5-3)

In the formula (5-1), Ar¹ represents a C6-C18 aryl group optionally containing a substituent. Preferred examples of the aryl group include a phenylene group, a tolylene group, a naphthylene group, and a biphenylene group, and more preferred examples include a phenylene group and a naphthylene group. An example of the substituent is a C1-C12 hydrocarbon group.

In the formula (5-2), Ar² represents a C6-C18 aryl group optionally containing a substituent. A preferred example of the aryl group is a biphenylene group. An example of the substituent is a C1-C12 hydrocarbon group.

In the formula (5-3), R¹ represents a C1-C8 alkylene group. The alkylene group is preferably a C1-C4 alkylene group, more preferably an ethylene group.

The liquid crystal polyester according to the present invention preferably contains a structure unit represented by the following formula (6-1) and/or a structure unit represented by the following formula (6-2). This structure allows the resin to have a higher solubility in the solvent, allows thick coating with the composition, and sufficiently reduces the number of coating actions, achieving a reduction in cost.

-[NH-Ar³-O]- (6-1)

-[NH-Ar⁴-NH]- (6-2)

In the formula (6-1), Ar³ represents a C6-C18 aryl group optionally containing a substituent. Preferred examples of the aryl group include a phenylene group, a tolylene group, a naphthylene group, and a biphenylene group, more preferred examples include a phenylene group and a naphthylene group, and a still more preferred example is a phenylene group. An example of the substituent is a C1-C12 hydrocarbon group.

In the formula (6-2), Ar⁴ represents a C6-C18 aryl group optionally containing a substituent. A preferred example of the aryl group is a phenylene group. An example of the substituent is a C1-C12 hydrocarbon group.

Of the structure unit represented by the above formula (6-1) and the structure unit represented by the above formula (6-2), the structure unit represented by the above formula (6-1) is preferred.

The liquid crystal polyester according to the present invention may contain a structure unit derived from a softening component (e.g., a nitrogen atom-containing monomer) other than a structure unit represented by the following formula (6-1) and a structure unit represented by the following formula (6-2). Such a structure allows the resin to have a higher solubility in the solvent.

Preferred examples of a commercial product of the liquid crystal polyester according to the present invention include liquid crystal polymers (VR300 and VR500, both available from Sumitomo Chemical Co., Ltd.).

The polycarbonate according to the present invention indicates a polycarbonate that contains a carbonate group (-O-CO-O-) at a bonding site between the structure units of monomers, and preferably contains a structure unit represented by the following formula (7).

-[Ar⁵-C(CH₃)₂-Ar⁶-O-CO-O]- (7)

In the formula (7), Ar⁵ and Ar⁶ are the same as or different from each other and each represent a C6-C18 aryl group optionally containing a substituent. Preferred examples of the aryl group include a phenylene group, a tolylene group, a naphthylene group, and a biphenylene group, more preferred examples include a phenylene group and a naphthylene group, and a still more preferred example is a phenylene group. An example of the substituent is a C1-C12 hydrocarbon group.

The thermoplastic resin (B) dissolved in the solvent according to the present invention has a glass transition temperature (Tg) of preferably 70°C or higher, more preferably 75°C or higher, still more preferably 80°C or higher. The glass transition temperature is preferably 130°C or lower, more preferably 110°C or lower, still more preferably 90°C or lower.

For example, the polyethylene isophthalate naphthalate preferably has a glass transition temperature of 70°C or higher and 130°C or lower.

The method for determining the glass transition temperature is as described in the examples.

The thermoplastic resin (B) dissolved in the solvent according to the present invention has a solubility in the solvent at 25°C of preferably 10% by mass or more, more preferably 20% by mass or more, still more preferably 30% by mass or more.

In the composition of the present invention, the thermoplastic resin (A) particles undissolved in the solvent and the thermoplastic resin (B) dissolved in the solvent have a mass ratio of preferably 1:1 to 20:1.

The mass ratio is more preferably 2:1 to 15:1, still more preferably 5:1 to 10:1.

The amount of all thermoplastic resins (when the thermoplastic resin (A) undissolved in the solvent and the thermoplastic resin (B) dissolved in the solvent are different resins having different compositions, total amount thereof) according to the present invention is preferably 5% by mass or more, more preferably 10% by mass or more, still more preferably 15% by mass or more, particularly preferably 20% by mass or more of 100% by mass of the solids content of the composition. Less than 5% by mass of the amount of all thermoplastic resins may fail to achieve the target effects. The upper limit of the amount of all thermoplastic resins is not limited and may be 100% by mass or less. When an additive such as a color material is separately added, the upper limit of the amount of all thermoplastic resins may be 70% by mass or less, for example.

### (Solvent)

Examples of the solvent in the composition of the present invention include, but are not limited to, ester solvents such as ethyl acetate, butyl acetate, propylene carbonate, and 4-butyrolactone; dibasic acid ester solvents such as dimethyl adipate, dimethyl glutarate, and dimethyl succinate; ketone solvents such as cyclohexanone, isophorone, and methyl isobutyl ketone; hydrocarbon solvents such as cyclohexane, toluene, and xylene; alcohol solvents such as benzyl alcohol and cyclohexanol; ether solvents such as ethylene glycol monobutyl ether, dipropylene glycol butyl ether, 2-(2-methoxy ethoxy)ethanol, and bis(2-methoxy ethyl)ether; amide solvents such as formamide, dimethyl formamide, and dimethyl acetamide; pyrrolidone solvents such as N-methyl-2-pyrrolidone, water, and mixtures of two or more of these. Preferred among these are ester solvents, ether solvents, and pyrrolidone solvents, more preferred are pyrrolidone solvents, and still more preferred is N-methyl-2-pyrrolidone.

Particularly preferred is a combination of: a pyrrolidone solvent such as N-methyl-2-pyrrolidone; a preferred thermoplastic resin (A) (a polybutylene naphthalate and/or a polyethylene naphthalate) undissolved in the solvent for constituting particles; and a preferred thermoplastic resin (B) (at least one selected from the group consisting of polyethylene isophthalate naphthalate, polyethersulfone, liquid crystal polyester, and polycarbonate) dissolved in the solvent.

The total amount of all the thermoplastic resins is set to be preferably 1 to 30% by mass, more preferably 5 to 25% by mass of the solution. Less than 1% by mass of the thermoplastic resins causes a problem in productivity. More than 30% by mass of the thermoplastic resins may not be dissolved.

The composition of the present invention may consist of only the solvent, the thermoplastic resin (A) particles undissolved in the solvent, and the thermoplastic resin (B) dissolved in the solvent or may consist of a mixture of the solvent, the thermoplastic resin (A) particles undissolved in the solvent, the thermoplastic resin (B) dissolved in the solvent, and a different resin other than a thermoplastic resin and/or an additive.

The different resin may be any resin generally used for a coating material, and examples thereof include heat curable resins such as a phenolic resin, a urea resin, a melamine resin, a silicone resin, an alkyd resin, and an epoxy resin. Use of these resins is against the original purpose of these resins, but does not inhibit the effects of the present invention.

In use of the different resin, the proportion of the different resin to be added may be appropriately set, and is preferably 10% by mass or less, more preferably 1% by mass or less based on 100% by mass of the total amount of the thermoplastic resin (A) particles undissolved in the solvent, the thermoplastic resin (B) dissolved in the solvent, and the different resin. Still more preferably, the composition of the present invention is substantially free from the different resin.

When the composition of the present invention is applied to a metal material, the composition is usually in the form of a suspended coating material containing particles of the resin.

The composition of the present invention may further contain a curing agent.

The curing agent is preferably one that reacts with any of the thermoplastic resins to form a crosslinked structure, and examples thereof include epoxy compounds such as a phenolic resin, an oxazoline resin, and a polyvalent epoxy compound, amino resins such as a urea resin, a melamine resin, and a benzoguanamine resin, an isocyanate compound, a carbodiimide-containing crosslinking agent, an aziridine-containing crosslinking agent, an acrylamide-containing crosslinking agent, a polyamide resin, various silane coupling agents, and various titanate-containing coupling agents. A polyvalent metal salt may also be used as a curing agent.

In use of any of these curing agents, the amount thereof is preferably 5 to 50 parts by mass, more preferably 10 to 30 parts by mass based on 100 parts by mass of the thermoplastic resin (B) dissolved in the solvent. Less than 5 parts by mass of the curing agent tends to cause reduced curability, while more than 50 parts by mass of the curing agent tends to provide too hard a coating film.

Examples of a polyvalent epoxy compound appropriate for the curing agent usable in the present invention include a polyvalent novolac epoxy resin, a polyvalent bisphenol epoxy resin, a polyvalent trisphenol methane epoxy resin, an amino group-containing polyvalent epoxy resin, and a copolymerized polyvalent epoxy resin. Examples of the polyvalent novolac epoxy resin include those obtained by reacting a novolac, which is obtained by a reaction of a phenol such as phenol, cresol, or alkylphenol and formaldehyde in the presence of an acidic catalyst, with epichlorohydrin and/or methyl epichlorohydrin. Examples of the polyvalent bisphenol epoxy resin include those obtained by reacting a bisphenol such as bisphenol A, bisphenol F, or bisphenol S with epichlorohydrin and/or methyl epichlorohydrin and those obtained by reacting a condensation product of a diglycidyl ether of bisphenol A and any of the above bisphenols with epichlorohydrin and/or methyl epichlorohydrin. Examples of the polyvalent trisphenol methane epoxy resin include those obtained by reacting trisphenol methane, triscresolmethane, or the like with epichlorohydrin and/or methyl epichlorohydrin. Examples of the amino group-containing polyvalent epoxy resin include polyvalent glycidyl amine epoxy resins such as tetraglycidyl diamino diphenylmethane, triglycidyl paraamino phenol, tetraglycidyl bisaminomethyl cyclohexanone, and N,N,N',N'-tetraglycidyl-m-xylene diamine. Examples of the copolymerized polyvalent epoxy resin include a copolymer of glycidyl methacrylate and styrene, a copolymer of glycidyl methacrylate, styrene, and methyl methacrylate, and a copolymer of glycidyl methacrylate, cyclohexyl maleimide, and the like.

A curing catalyst may be used for a curing reaction of the polyvalent epoxy compound usable in the present invention. Examples of the curing catalyst include imidazole-containing compounds such as 2-methylimidazole, 1,2-dimethylimidazole, 2-ethyl-4-methylimidazole, 2-phenyl-4-methylimidazole, and 1-cyanoethyl-2-ethyl-4-methylimidazole; tertiary amines such as triethylamine, triethylene diamine, N'-methyl-N-(2-dimethylaminoethyl)piperazine, 1,8-diazabicyclo(5,4,0)-7-undecene, 1,5-diazabicyclo(4,3,0)-5-nonene, and 6-dibutylamino-1,8-diazabicyclo(5,4,0)-7-undecene, and an amine salt compound of any of these tertiary amines and a phenol, octyl acid, a quaternized tetraphenyl borate salt, or the like; cation catalysts such as triallylsulfonium hexafluoroantimonate and diallyliodonium hexafluoroantimonate; and triphenyl phosphine. Preferred among these are tertiary amines such as 1,8-diazabicyclo(5,4,0)-7-undecene, 1,5-diazabicyclo(4,3,0)-5-nonene, and 6-dibutylamino-1,8-diazabicyclo(5,4,0)-7-undecene and an amine salt compound of any of the tertiary amines and a phenol, octylic acid, a quaternized tetraphenyl borate salt, or the like in terms of the thermal curability, heat resistance, adhesion to metal, and storage stability after being blended with other components.

Examples of the phenolic resin appropriate for the curing agent usable in the present invention include condensation products of an alkylated phenol and/or a cresol and formaldehyde. Specific examples thereof include alkylated phenols alkylated with an alkyl group such as a methyl group, an ethyl group, a propyl group, an isopropyl group, or a butyl group; and condensation products of formaldehyde and a phenol such as p-tert-amylphenol, 4, 4'-sec-butylidenephenol, p-tert-butyl phenol, o-cresol, m-cresol, p-cresol, p-cyclohexyl phenol, 4,4'-isopropylidenephenol, p-nonylphenol, p-octyl phenol, 3-pentadecylphenol, phenol, phenyl o-cresol, p-phenyl phenol, xylenol, or the like.

Examples of the amino resin appropriate for the curing agent usable in the present invention include formaldehyde adducts such as urea, melamine, and benzoguanamine; and alkyl ether compounds obtained by alkoxylating any of these compounds with a C1-C6 alcohol. Specific examples thereof include methoxylated methylol urea, methoxylated methylol-N,N-ethylene urea, methoxylated methylol dicyandiamide, methoxylated methylol melamine, methoxylated methylol benzoguanamine, butoxylated methylol melamine, and butoxylated methylol benzoguanamine. Preferred among these are methoxylated methylol melamine, butoxylated methylol melamine, and methylolated benzoguanamine. Any of these may be used alone or in combination of two or more thereof.

The polyvalent isocyanate compound appropriate for the curing agent usable in the present invention may be a low-molecular compound or a high-molecular compound. Examples of the low-molecular compound include aliphatic isocyanate compounds such as tetramethylene diisocyanate and hexamethylene diisocyanate; aromatic polyvalent isocyanate compounds such as toluene diisocyanate, diphenylmethane diisocyanate, and xylylene diisocyanate; and alicyclic polyvalent isocyanates such as hydrogenated diphenylmethane diisocyanate, hydrogenated xylylene diisocyanate, and isophorone diisocyanate. The examples also include trimers of these polyvalent isocyanate compounds. Examples of the high-molecular compound include isocyanate group-terminated compounds obtainable by a reaction of a compound containing multiple active hydrogen atoms and an excessive amount of the low-molecular polyisocyanate compound. Examples of the compound containing multiple active hydrogen atoms include polyhydric alcohols such as ethylene glycol, propylene glycol, trimethylol propane, glycerin, and sorbitol; polyvalent amines such as ethylene diamine; compounds containing a hydroxy group and an amino group, such as monoethanol amine, diethanol amine, and triethanol amine; and polymers containing multiple active hydrogen atoms, such as polyester polyols, polyether polyols, and polyamides.

The polyvalent isocyanate compound may be a blocked isocyanate. A blocked isocyanate is obtained by an appropriate addition reaction of the isocyanate compound and an isocyanate-blocking agent by a conventionally known method. Examples of the isocyanate-blocking agent include phenols such as phenol, thiophenol, methyl thiophenol, cresol, xylenol, resorcinol, nitrophenol, and chlorophenol; oximes such as acetoxime, methyl ethyl ketoxime, and cyclohexanone oxime; alcohols such as methanol, ethanol, propanol, and butanol; halogen-substituted alcohols such as ethylene chlorohydrin and 1,3-dichloro-2-propanol; tertiary alcohols such as t-butanol and t-pentanol; and lactams such as ε-caprolactam, δ-valerolactam, γ-butyrolactam, and β-propyllactam; as well as aromatic amines; imides; active methylene compounds such as acetylacetone, acetoacetate, and ethyl malonate; mercaptans; imines; ureas; diaryl compounds; and sodium bisulfite.

The polyvalent oxazoline compound appropriate for the curing agent usable in the present invention is a compound that contains an oxazoline group in a molecule, and is particularly preferably an oxazoline group-containing polymer that can be produced by polymerizing an addition-polymerizable oxazoline group-containing monomer alone or with a different monomer. Examples of the addition-polymerizable oxazoline group-containing monomer include 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline, and 2-isopropenyl-5-ethyl-2-oxazoline. Any one of these or a mixture of two or more thereof can be used. Among these, 2-isopropenyl-2-oxazoline is preferred in terms of industrial availability. The different monomer may be any monomer copolymerizable with the addition-polymerizable oxazoline group-containing monomer, and examples thereof include (meth)acrylates such as alkyl (meth)acrylates (examples of the alkyl group include methyl, ethyl, n-propyl, isopropyl, n-butyl, isobutyl, t-butyl, 2-ethyl hexyl, and cyclohexyl groups); unsaturated carboxylic acids such as acrylic acid, methacrylic acid, itaconic acid, maleic acid, fumaric acid, crotonic acid, styrene sulfonic acid, and salts (e.g., sodium salts, potassium salts, ammonium salts, and tertiary amine salts) of these; unsaturated nitriles such as acrylonitrile and methacrylonitrile; unsaturated amides such as (meth)acrylamide, N-alkyl (meth)acrylamide, and N,N-dialkyl (meth)acrylamide (examples of the alkyl group include methyl, ethyl, n-propyl, isopropyl, n-butyl, isobutyl, t-butyl, 2-ethyl hexyl, and cyclohexyl groups); vinyl esters such as vinyl acetate and vinyl propionate; vinyl ethers such as methyl vinyl ether and ethyl vinyl ether; α-olefins such as ethylene and propylene; halogen-containing α,β-unsaturated monomers such as vinyl chloride, vinylidene chloride, and vinyl fluoride; and α,β-unsaturated aromatic monomers such as styrene and α-methyl styrene. Any one or two or more of these monomers can be used.

The composition of the present invention may further contain a catalyst. Presence of a catalyst can improve the properties of a cured film. In the cases where the curing agent is a phenolic resin or an amino resin, examples of the catalyst include sulfuric acid, p-toluenesulfonic acid, dodecylbenzene sulfonic acid, naphthalene sulfonic acid, dinonylnaphthalene sulfonic acid, dinonylnaphthalene disulfonic acid, camphorsulfonic acid, phosphoric acid, and those obtained by amine-blocking (adding an amine and thereby partly neutralizing) these acids. Any one or two or more of these can be used. Preferred among these are dodecylbenzene sulfonic acid and a neutralized product thereof in terms of the compatibility with polyethylene isophthalate naphthalate and sanitary management. In the case where the curing agent is an isocyanate compound, examples of the catalyst include organic tin compounds such as tin 2-ethylhexanoate and dibutyl tin dilaurate, and triethylamine. Any one or two or more of these can be used.

In order to impart other functions to an applied layer within the range not impairing the effects of the present invention, the composition of the present invention may further contain various additives. Examples of the additive include known inorganic or organic particles such as titanium oxide, silica, and alumina; a pigment, a dye, an antistatic agent, a leveling agent, a fluorescent dye, a fluorescent brightener, a plasticizer, a disperser, an ultraviolet absorber, a pigment disperser, an antisettling agent, a foam suppressor, a defoaming agent, an antiskinning agent, an anti-sagging agent, a delusterant, a thickener, a mildew-proofing agent, an antiseptic agent, a conductive agent, a defoaming agent, a surface-flattening agent, a lubricant, and a fire retardant. Furthermore, the composition may appropriately contain a resin other than polyethylene isophthalate naphthalate. Examples of the resin include a polyester resin other than polyethylene isophthalate naphthalate, a polyurethane resin, a polyimide resin, a polyamide-imide resin, an ethylene-polymerizable unsaturated carboxylic acid copolymer, and an ethylene-polymerizable carboxylic acid copolymer ionomer.

Examples of particles that can be contained in the composition of the present invention or in an applied layer formed from the composition of the present invention include inorganic particles such as silica, kaolinite, talc, light calcium carbonate, heavy calcium carbonate, zeolite, alumina, barium sulfate, carbon black, zinc oxide, zinc sulfate, zinc carbonate, zirconium dioxide, titanium dioxide, satin white, aluminum silicate, diatomaceous earth, calcium silicate, aluminum hydroxide, hydrated halloysite, magnesium carbonate, and magnesium hydroxide; and organic particles such as acryl- or (meth)acrylic particles, vinyl chloride-based particles, vinyl acetate-based particles, nylon-based particles, styrene/acryl-based particles, styrene/butadiene-based particles, polystyrene/acryl-based particles, polystyrene/isoprene-based particles, polystyrene/isoprene-based particles, methyl methacrylate/butyl methacrylate-based particles, melamine-based particles, polycarbonate-based particles, urea-based particles, epoxy-based particles, urethane-based particles, phenol-based particles, diallyl phthalate-based particles, and polyester-based particles.

The composition of the present invention may contain a metal compound or the like within the range not impairing the effects of the present invention. Examples of the metal constituting the metal compound include, but are not limited to, monovalent metals such as lithium, sodium, potassium, rubidium, and cesium; and divalent or higher metals such as magnesium, calcium, zirconium, zinc, copper, cobalt, iron, nickel, and aluminum. The metal compound is a compound containing any of the above metals. Examples of the compound include inorganic salts such as oxides, hydroxides, halides, carbonates, hydrogencarbonates, phosphates, and sulfates, and organic acid salts such as carboxylates including acetates, formates, stearates, citrates, malates, and maleates, and sulfonates. Preferred among these are oxides and carbonates. Also, an elemental metal may be used as the metal compound.

The composition of the present invention can be suitably used as a coating component. The composition can also be formed into a coated layer that is suitable for coating materials such as films; glass; metal cans such as aluminum cans, stainless steel cans, and tin cans; steel plates such as common steel plates, plated steel plates, and lubricating steel plates; and a metal such as a metal deposited layer or a primer layer on a metal.

The amount of the composition of the present invention for forming a coating film (coated layer) through coating is preferably 0.1 to 50 g/m², more preferably 1 to 50 g/m², still more preferably 3 to 20 g/m², particularly preferably 3 to 10 g/m² in terms of the mass of the composition after drying.

Formation of a coating film using the composition of the present invention can be suitably performed by coating an object with the composition of the present invention (also referred to as applying the composition of the present invention to an object), evaporating the solvent by heating, and then melting the particles. Thereby, a uniform pinhole-free coating film can be formed.

The heating temperature for coating with the composition of the present invention is preferably 100°C to 300°C, more preferably 150°C to 290°C, still more preferably 200°C to 280°C. A heating temperature of lower than 100°C may cause a failure in forming a coated layer with sufficient durability due to insufficient evaporation of the solvent and insufficient softening, melting, and crystallization of the resin. A heating temperature of higher than 300°C may cause deteriorated physical properties of the resin, such as coloring of the resin.

The heating duration is preferably 1 to 60 minutes, more preferably 1.5 to 30 minutes, still more preferably 2 to 20 minutes. Heating for shorter than one minute may cause a failure in forming a coated layer with sufficient durability due to insufficient evaporation of the solvent and insufficient softening, melting, and crystallization of the resin. Heating for longer than 60 minutes may cause deteriorated physical properties of the resin, such as coloring of the resin.

The coating film according to the present invention has an average thickness of preferably 35 µm or smaller, more preferably 20 µm or smaller, still more preferably 15 µm or smaller in terms of providing final products having a predetermined dimension.

The lower limit of the average thickness is usually, but not limited to, 1 µm or greater.

### (Laminate)

The present invention also relates to a laminate coated with the composition of the present invention.

The laminate of the present invention can be produced by, for example, coating a substrate such as a film or glass with the composition of the present invention. The coating can be carried out by an appropriate method such as spray coating, brush coating, spatula coating, coating with a roll coater, coating with a spin coater, coating with a bar coater, dip coating, electrodeposition coating, or electrostatic coating.

The laminate of the present invention is, for example, a laminate of a non-metal substrate such as a film or glass and a coated layer formed by coating with the composition of the present invention.

### (Coated metal article)

The present invention also relates to a coated metal article coated with the composition of the present invention.

The coated metal article of the present invention is obtainable, for example, by coating materials such as metal cans including aluminum cans, stainless steel cans, and tin cans; steel plates including common steel plates, plated steel plates, and lubricating steel plates; and a metal such as a metal deposited layer or a primer layer on a metal, with the composition of the present invention. The coating can be carried out by an appropriate method such as spray coating, brush coating, spatula coating, coating with a roll coater, coating with a spin coater, coating with a bar coater, dip coating, electrodeposition coating, or electrostatic coating, as described in the above.

Examples of the metal included in the coated metal article of the present invention include, but are not limited to, stainless steel, nickel-titanium alloys, titanium, titanium alloys, cobalt-chromium alloys, nickel-chromium alloys, gold alloys, gold-platinum alloys, gold-silver-palladium alloys, and silver alloys. Any one or two or more of these can be used.

Examples of the coated metal article of the present invention include metal cans such as aluminum cans, stainless steel cans, and tin cans; steel plates such as common steel plates, plated steel plates, and lubricating steel plates; and automobiles and home electrical appliances including metal deposited layers.

In the laminate and coated metal article of the present invention, a primer layer may be further formed on the surface of a material in order to improve the adhesion of the resin to the substrate. Examples of a composition for forming the primer layer include an acrylic resin, an epoxy resin, a polyethylene naphthalate resin, and a silicone resin. The composition may further contain a lactone ring-containing compound, an oxazoline ring-containing compound, a silane coupling agent, or the like.

The laminate and coated metal article of the present invention may be entirely or partly coated with a coating film.

### (Polyethylene isophthalate naphthalate)

The present invention also relates to a polyethylene isophthalate naphthalate containing a structure unit derived from isophthalic acid in an amount of more than 10 mol% and 90 mol% or less based on 100 mol% of all structure units derived from all acid components. The amount of the structure unit derived from isophthalic acid is preferably 30 mol% or more and 70 mol% or less, for example.

The polyethylene isophthalate naphthalate of the present invention has fluidity. Thus, when a coating layer is formed using a composition containing the polyethylene isophthalate naphthalate (especially a suspended coating material containing resin particles), the solvent is easily removed, and a coating layer can be suitably formed.

The polyethylene isophthalate naphthalate of the present invention preferably has a glass transition temperature of 70°C or higher and 130°C or lower, for example.

Fig. 1 is a conceptual view showing that the composition of one of the later-described examples is turned into a coating film. When a coating material containing the composition is applied and heated, the solvent is easily removed because the polyethylene isophthalate naphthalate (PIN-OH, PIN-COOH) has fluidity. Also, polyethylene naphthalate particles (PEN fine particles) can be densely arranged. As a result, the resulting film can sufficiently exert the processability, curability, retort resistance or heat resistance, and abrasion resistance as described later. The "PIN-OH" means a polyethylene isophthalate naphthalate resin terminated with a hydroxy group, and the "PIN-COOH" means a polyethylene isophthalate naphthalate resin terminated with a carboxy group.

### EXAMPLES

Hereinafter, the present invention is specifically described with reference to examples which do not intend to limit the present invention. Any modification may be made within the technical scope of the present invention.

### <Number average molecular weight>

A polyethylene glycol isophthalate naphthalate (hereinafter, referred to as PIN) resin sample was dissolved in tetrahydrofuran at a resin concentration of about 0.5% by mass, and the solution was filtered with a polytetrafluoroethylene membrane filter having a pore diameter of 0.5 µm to provide a measurement sample. The number average molecular weight was determined by gel permeation chromatography (GPC) using tetrahydrofuran as a mobile phase and a differential refractive index detector as a detector. The flow rate was 0.6 mL/min, and the column temperature was 40°C. Two TSKgel SuperHM-H columns and a TSKgel SuperH2000 column, both available from TOSOH, were used. Monodispersed polystyrene was used as a molecular weight standard.

### <Acid value>

About 0.2 g of resin solids content was weighed and dissolved in 20 ml of chloroform. Then, titration was performed using phenolphthalein as a reaction indicator and a 0.1 N-KOH ethanol solution. The point where the solution turned into red was taken as a point of neutralization, and the acid value was expressed in terms of equivalent for 10⁶ g (It) of the resin (eq/t).

### <Hydroxyl value>

A PIN resin sample in an amount of 0.5 g was dissolved in 10 ml of a pyridine solution of 0.5 N acetic anhydride, and 10 mL of pure water was added thereto. Then, titration was performed using a 0.2 N sodium hydroxide mixed solution containing water and methanol at a ratio of 1:19 in the presence of phenolphthalein as an indicator. The point where the solution turned into red was taken as a point of neutralization, and the acid value was expressed in terms of equivalent for 10⁶ g (1t) of PIN resin (eq/t).

### <Glass transition temperature (Tg)>

The glass transition temperature was determined with a differential scanning calorimeter (DSC-200, available from SII). A PIN resin sample in an amount of 5 mg was placed in an aluminum container equipped with a snap-in lid and sealed. The container was cooled to -50°C with liquid nitrogen and then heated to 150°C at a rate of 20°C/min. On the endothermic curve obtained through this process, the temperature corresponding to the intersection of the base line before the endothermic peak and the tangent line approaching the endothermic peak was taken as the glass transition temperature (Tg, unit: °C).

### <¹H-NMR analysis>

A PIN resin sample was dissolved in deuterated chloroform or deuterated dimethyl sulfoxide, and ¹H-NMR analysis was performed using 400-NMR that was an NMR device available from VARIAN. The ratio by mole was calculated from the integral ratio. Similarly, a polyethylene naphthalate, a polyethersulfone, and a liquid crystal polyester were dissolved in deuterated chloroform or deuterated dimethyl sulfoxide, optionally followed by addition of trifluoroacetic acid (TFA), and the composition thereof was determined.

### (Synthesis Example 1)

### Production of PIN resin No. 1

A 500-ml glass flask equipped with a thermometer, a stirrer, and a Liebig condenser was charged with 50 parts of isophthalic acid, 161 parts of naphthalene dicarboxylic acid, 85 parts of terephthalic acid, and 205 parts of ethylene glycol, and then an esterification reaction was allowed to proceed at 2 atm nitrogen pressure from 160°C to 230°C over three hours. After pressure discharge, the flask was charged with 0.01 parts of tetrabutyl titanate, and the pressure of the system was gradually reduced to 5 mmHg over 30 minutes. Then, a polycondensation reaction was allowed to proceed under vacuum, i.e., at an atmospheric pressure of 0.3 mmHg or less, at 260°C for 40 minutes. The flask was then charged with 5.8 parts of trimellitic anhydride, followed by stirring at 210°C for two hours. The content was then taken out and cooled. Table 1 shows the properties of the resulting PIN resin No. 1, including the composition and the number average molecular weight.

### (Synthesis Examples 2 to 5)

### Production of PIN resins No. 2 to No. 5

PIN resins No. 2 to No. 5 were each synthesized in the same manner as for the PIN resin No. 1 except that the raw materials and the proportions thereof were changed according to Table 1, and the same evaluations as for the PIN resin No. 1 were performed. Table 1 shows the evaluation results.

**[Table 1]**

| | | | Synthesis Example | | | | |
|---|---|---|---|---|---|---|---|
| | | | 1 | 2 | 3 | 4 | 5 |
| PIN resin No. | | | 1 | 2 | 3 | 4 | 5 |
| Composition of PIN resin (mol%) | Acid component | Isophthalic acid (IPA) | 20 | 50 | 30 | 40 | 5 |
| | | Naphthalene dicarboxylic acid (NDC) | 44 | 50 | 60 | 30 | 95 |
| | | Terephthalic acid | 34 | - | - | - | - |
| | | Sebacic acid | - | - | 10 | 30 | - |
| | | Trimellitic acid | 2 | - | - | - | - |
| | Glycol component | Ethylene glycol | 100 | 100 | 90 | 10 | 100 |
| | | Diethylene glycol | - | - | 10 | 90 | - |
| Properties of PIN resin | IPA + NDC (molar ratio) | | 65 | 100 | 90 | 70 | 100 |
| | IPA/NDC (molar ratio) | | 23/77 | 50/50 | 33/67 | 57/43 | 5/95 |
| | Number average molecular weight | | 2000 | 8000 | 25000 | 3000 | 10000 |
| | Acid value (eq/t) | | 1600 | 10 | 5 | 5 | 5 |
| | Hydroxyl value (eq/t) | | 200 | 250 | 80 | 665 | 200 |
| | Acid value + Hydroxyl value (eq/t) | | 1800 | 260 | 85 | 670 | 205 |
| | Glass transition temperature (°C) | | 91 | 86 | 73 | 60 | 125 |

The PIN resin No. 5 synthesized in Synthesis Example 5 does not correspond to the "thermoplastic resin (B) dissolved in the solvent" of the present invention in the present example because the resin was not dissolved in the solvent as described in Comparative Example 3.

### (Synthesis Example 6) (Dissolution and precipitation of thermoplastic resin (A))

A 2-L flask equipped with a thermometer, a stirrer, and a reflux condenser was charged with 935 g of N-methylpyrrolidone as a solvent. To the solvent being stirred at room temperature, 165 g of polyethylene naphthalate resin (TN8065S, available from Teijin, Ltd.) was added little by little, was dispersed therein, and then was dissolved therein by raising the liquid temperature to 190°C. The solution was gradually cooled to precipitate resin particles having a number average particle size of 2 to 3 µm. Thereby, a thermoplastic resin (A) (polyethylene naphthalate resin) undissolved in the solvent having a solids content of 15% was obtained.

### (Example 1)

A 200-mL flask equipped with a thermometer, a stirrer, and a reflux condenser was charged with 80 g of N-methylpyrrolidone as a solvent. To the solvent being stirred at room temperature, 20 g of the synthesized PIN resin No. 1 was added little by little and dispersed therein, followed by stirring at 190°C for one hour. The content was then taken out and cooled, whereby a PIN resin solution having a solids content of 20% was produced. The resulting solution was blended with the thermoplastic resin (A) undissolved in the solvent, a curing agent, and the like, and then the curability, processability, retort resistance, and abrasion resistance were evaluated. Table 2 shows the results.

### (Examples 2 to 6)

PIN resin solutions were each produced as in Example 1, except that the raw materials and the proportions thereof were changed according to Table 2. Similarly to Example 1, the resulting solution was blended with the thermoplastic resin (A) undissolved in the solvent, a curing agent, and the like, and then the curability, processability, retort resistance, and abrasion resistance were evaluated. Table 2 shows the results. Each of the solutions showed a high solubility, and each of the blended compositions had a good balance between a crystalline component and an amorphous component and showed a high curability, processability, retort resistance, and abrasion resistance.

### (Comparative Examples 1 and 2)

Production of PIN resin solutions was attempted in the same manner as in Example 1 except that the raw materials and the proportions thereof were changed according to Table 2. For the case succeeded in producing a PIN resin solution, the solution was blended with the thermoplastic resin (A) undissolved in the solvent, a curing agent, and the like as in Example 1, and the curability, processability, retort resistance, and abrasion resistance were evaluated. Table 2 shows the results.

### (Evaluation)

### <Production of specimen>

A composition for a can coating material was applied to a surface of a tin plate (JIS G 3303(2008) SPTE, having a size of 70 mm × 150 mm × 0.3 mm) using a bar coater such that the film thickness after drying was 10 ± 2 µm, and the workpiece was cured by baking at 200°C (PMT: peak metal temperature) for 10 minutes to provide a specimen (hereinafter, simply referred to as a specimen).

### <Curability evaluation>

Gauze felt impregnated with methyl ethyl ketone was pushed to the cured film surface of the specimen with a contact area of 1 cm², and a rubbing test was performed with a 500-g load. The number of rubbing actions (one reciprocation corresponds to one action) when the cured film was peeled off was evaluated according to the following criteria.

### (Evaluation)

Excellent: The coating film was not peeled off even after 50 or more actions, and the cured film had no change.
Good: The cured film was peeled off between 25 to 49 actions, and the tin plate was exposed.
Fair: The cured film was peeled off between 16 to 24 actions, and the tin plate was exposed.
Poor: The cured film was peeled off at or before 15 actions, and the tin plate was exposed.

### <Processability evaluation>

The resulting specimen was subjected to 180° folding processing with the cured film positioned outside, and a crack occurred at the fold of the cured film was evaluated by measuring the current value. On an aluminum plate electrode (width: 20 mm, depth: 50 mm, thickness: 0.5 mm) was placed a sponge (width: 20 mm, depth: 50 mm, thickness: 10 mm) impregnated with a 1% NaCl aqueous solution, and the sponge was made in contact with a portion around the center of the fold of the specimen with the 20 mm side of the sponge and the fold being parallel to each other. A 5.0 V DC voltage was applied between the aluminum plate electrode and a non-coated portion on the back surface of the test plate, and the current value was measured. A lower current value indicates better folding property.

### (Criteria)

Excellent: lower than 0.5 mA
Good: 0.5 mA or higher and lower than 1.0 mA
Fair: 1.0 mA or higher and lower than 2.0 mA
Poor: 2.0 mA or higher

### <Retort resistance evaluation>

A specimen was placed to stand in a stainless steel cup, and ion-exchange water was poured to half the height of the specimen. The cup was then placed in the pressure vessel of a retort tester (ES-315, available from Tomy Industries Co., Ltd.) and was subjected to retort processing at 130°C for 60 minutes. The portion having been in contact with steam, which is usually a portion exposed to more severe environment than other portions, of the cured film after the processing was subjected to evaluation. Whitening of the cured film and the state of blister were visually evaluated according to the following criteria.

### (Criteria)

Excellent: no problems (none of whitening or blister)
Good: having slight whitening but no blister
Fair: having some whitening and/or some blister
Poor: having significant whitening and/or significant blister

### <Abrasion resistance evaluation>

A steel wool abrasion test was performed. A 5-cm × 13-cm specimen was prepared. Meanwhile, steel wool (#0000) was mounted on the head of a rubbing tester: type I (available from Taihei Rika Co., Ltd.), and a predetermined number of actions (5, 10, 20, 50, or 100 actions) of rubbing (sliding distance: 50 mm, reciprocation rate: 40 reciprocations/min) was performed with a 0.98 N/cm² load, and the number of rubbing actions when the metal substrate was exposed was visually evaluated.
Excellent: The coating film was not peeled off even after 100 actions, and the cured film had no change.
Good: The cured film was peeled off between 51 to 99 actions, and the tin plate was exposed.
Fair: The cured film was peeled off between 21 to 50 actions, and the tin plate was exposed.
Poor: The cured film was peeled off at or before 20 actions, and the tin plate was exposed.

Specification of the components shown in Table 2 is as follows.
Polyethersulfone resin: E6010GP, available from BASF, solids content 20%
Liquid crystal polyester: VR500, available from Sumitomo Chemical Co., Ltd., solids content 20%
PR-899: resol-type phenolic resin, available from Allnex
Cymel^{®} 1123: methylated/ethylated benzoguanamine, available from Allnex
Epocros^{®} RPS-1005: oxazoline group-containing reactive polystyrene, available from Nippon Shokubai Co., Ltd.
Nacure^{®} 5076: dodecylbenzene sulfonic acid, available from King Industries

**[Table 2]**

| | | | Example | | | | | | Comparative Example | |
|---|---|---|---|---|---|---|---|---|---|---|
| | | | 1 | 2 | 3 | 4 | 5 | 6 | 1 | 2 |
| Composition (proportion by mass) | Thermoplastic resin (A) undissolved in solvent | | 90 | 85 | 95 | 70 | 80 | 90 | 100 | - |
| | Thermoplastic resin (B) dissolved in solvent | PIN resin No. 1 | 10 | - | - | - | - | - | - | - |
| | | PIN resin No. 2 | - | - | - | - | 20 | - | - | - |
| | | PIN resin No. 3 | - | - | 5 | - | - | - | - | - |
| | | PIN resin No. 4 | - | - | - | - | - | 10 | - | - |
| | | Polyethersulfone resin | - | 15 | - | - | - | - | - | 100 |
| | | Liquid crystal polyester | - | - | - | 30 | - | - | - | - |
| | Curing agent | PR-899 | - | 1.5 | - | - | 1 | 1 | - | - |
| | | Cymel 1123 | - | - | 0.2 | 3 | 1 | - | - | 10 |
| | | Epocros RPS-1005 | 1 | - | - | - | - | - | - | - |
| | Solvent | Nacure 5076 | - | 0.1 | 0.01 | 0.1 | 0.1 | 0.1 | - | 0.1 |
| Evaluation | Mass ratio (A):(B) | | 9:1 | 5.7:1 | 19:1 | 2.3:1 | 4:1 | 9:1 | 10:0 | 0:10 |
| | Curability | | Excellent | Excellent | Good | Excellent | Excellent | Excellent | Poor | Good |
| | Processability | | Excellent | Excellent | Excellent | Good | Excellent | Excellent | Poor | Poor |
| | Retort resistance | | Excellent | Excellent | Excellent | Excellent | Excellent | Good | Poor | Poor |
| | Abrasion resistance | | Excellent | Excellent | Excellent | Excellent | Excellent | Good | Poor | Poor |

### (Comparative Example 3)

Similarly to the aforementioned examples, the PIN resin No. 5 in an amount of 20 g was added little by little to 80 g of N-methylpyrrolidone as a solvent and the mixture was stirred at 190°C for one hour. However, a large amount of undispersed resin was left even after the stirring, and still another one-hour stirring even failed to dissolve the resin. This is presumably caused by a low solvent solubility due to a large amount of the isophthalic acid component and a small amount of the naphthalene dicarboxylic acid component.

The compositions of Examples 1 to 6, containing a solvent, thermoplastic resin (A) particles undissolved in the solvent, and a thermoplastic resin (B) dissolved in the solvent, each had a sufficiently satisfying level of processability, curability, retort resistance or heat resistance, and abrasion resistance.

In contrast, the composition of Comparative Example 1, containing only the resin particles (A) undissolved in the solvent as a resin, had difficulty in removing the solvent during curing and resultantly had poor curability. The composition of Comparative Example 2, containing only the resin (B) dissolved in the solvent as a resin, had poor processability and retort resistance, and abrasion resistance.

## Claims

1. A composition comprising:
a solvent;
thermoplastic resin (A) particles undissolved in the solvent; and
a thermoplastic resin (B) dissolved in the solvent.

2. The composition according to claim 1, wherein the thermoplastic resin (A) particles undissolved in the solvent contain a polybutylene naphthalate and/or a polyethylene naphthalate.

3. The composition according to claim 1 or 2, wherein the thermoplastic resin (B) dissolved in the solvent contains at least one selected from the group consisting of a polyethylene isophthalate naphthalate, a polyethersulfone, a liquid crystal polyester, and a polycarbonate.

4. The composition according to any one of claims 1 to 3,
wherein the thermoplastic resin (A) particles undissolved in the solvent and the thermoplastic resin (B) dissolved in the solvent have a mass ratio of 1:1 to 20:1.

5. A laminate coated with the composition according to any one of claims 1 to 4.

6. A coated metal article coated with the composition according to any one of claims 1 to 4.

7. A polyethylene isophthalate naphthalate comprising
a structure unit derived from isophthalic acid in an amount of more than 10 mol% and 90 mol% or less based on 100 mol% of all structure units derived from all acid components.

8. The polyethylene isophthalate naphthalate according to claim 7, having a glass transition temperature of 70°C or higher and 130°C or lower.
